# EUROPEAN PATENT APPLICATION

(11) **EP 4 054 173 A1**
(43) Date of publication of application: **07.09.2022**
(21) Application number: 22155095.7
(22) Date of filing: 04.02.2022
(51) Int. Cl.: H04N 5/232, G08B 13/196, H03K 19/00

(54) **IMAGE CAPTURING APPARATUS, METHOD FOR CONTROLLING IMAGE CAPTURING APPARATUS**

(30) Priority: 01.03.2021 JP 2021032039
(71) Applicant: CANON KABUSHIKI KAISHA, Ohta-ku Tokyo 146-8501 (JP)
(72) Inventor: SUZUKI, Kengo, Ohta-ku, 146-8501 (JP)
(74) Representative: TBK

(57) **Abstract**

From a device mounted detachably to the image capturing apparatus, first information regarding data regarding a structure of a logic circuit in the device and second information regarding a learned model that the device is to use are received. Based on the first information, an update of the data that the device holds is controlled, and based on the second information, an update of the learned model that the device holds is controlled.

## Description

### BACKGROUND OF THE INVENTION

### Field of the Invention

The present invention relates to a technique for setting a device which is detachably mounted to an image capturing apparatus.

### Description of the Related Art

Recently, in various situations, using images captured by the surveillance camera, image analysis for performing detection and tracking of an object and estimation of the attribute or the like, and image processing such as estimation of the number of an object based on the result of such image analysis have been performed. In the past, surveillance camera video has been transferred to a highperformance arithmetic apparatus such as a PC or a server, and the arithmetic apparatus has performed image analysis on the image; however, as the processing capacity of mobile arithmetic apparatuses has improved, image analysis is being increasingly performed on the surveillance camera side. In addition to arranging an arithmetic apparatus in the main body of a surveillance camera, a form in which the arithmetic apparatus is connected to the surveillance camera via a USB or the like has also been proposed as an implementation of this. In an implementation in which the arithmetic apparatus is arranged on a surveillance camera body, it is possible to perform more advanced analysis processing on the surveillance camera side by attaching a detachable device having an arithmetic apparatus to the surveillance camera.

In the above-described implementation, the detachable device has a storage unit for storing configuration data, in which a circuit configuration and setting information of an arithmetic apparatus are described, and a learned deep learning model. The detachable device reads information from the storage unit when it activates, and loads an input/output control circuit and an arithmetic circuit. When the application using the detachable device is changed, or when the arithmetic apparatus or the deep learning model is improved, it is necessary to rewrite the configuration data and the learned deep learning model stored in the storage unit of the arithmetic apparatus from the surveillance camera.

Japanese Patent Laid-Open No. 2002-305438 discloses a technique for detecting data of a specific pattern inputted to an arithmetic apparatus, writing configuration data in a storage unit using the data as a trigger, and incorporating the data at a timing when a reset signal is inputted to thereby change a function.

However, the technique disclosed in the above-mentioned Japanese Patent Laid-Open No. 2002-305438 does not determine whether or not the configuration data is appropriate, and there is a problem that the arithmetic apparatus of the detachable device cannot be started when the configuration data is improper.

### SUMMARY OF THE INVENTION

The present invention provides a technique for preventing data or a learned model relating to the structure of a logic circuit in a device detachably mounted to an image capturing apparatus from being updated to inappropriate data or an inappropriate learned model.

The present invention in its first aspect provides an image capturing apparatus as specified in claims 1 to 7.

The present invention in its second aspect provides an information processing apparatus as specified in claims 8 to 10.

The present invention in its third aspect provides a method for controlling an image capturing apparatus as specified in claim 11.

Further features of the present invention will become apparent from the following description of exemplary embodiments (with reference to the attached drawings).

### BRIEF DESCRIPTION OF THE DRAWINGS

FIG. 1 is a block diagram illustrating a configuration example of a system.
FIG. 2 is a block diagram illustrating an example of a hardware configuration of an image capturing apparatus 110.
FIG. 3 is a block diagram illustrating an example of a functional configuration of the image capturing apparatus 110.
FIG. 4 is a block diagram illustrating an example of a hardware configuration of a detachable device 100.
FIG. 5 is a block diagram illustrating an example of a functional configuration of the detachable device 100.
FIG. 6 is a block diagram illustrating an example of a hardware configuration of an input/output apparatus 130.
FIG. 7 is a block diagram illustrating an example of a functional configuration of the input/output apparatus 130.
FIG. 8 is a flowchart illustrating an outline of an operation of the system.
FIG. 9 is a flowchart of an update process with a check.
FIG. 10 is a flowchart of an update process with a check.
FIG. 11 is a flowchart of an update process with a check.
FIG. 12A is a diagram illustrating examples of screen displays.
FIG. 12B is a diagram illustrating examples of screen displays.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### [First Embodiment]

### <System Configuration>

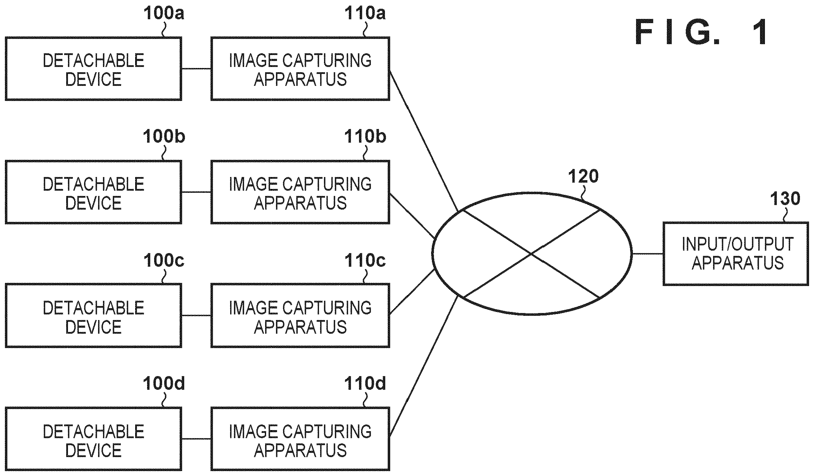

First, a configuration example of a system according to the present embodiment is described with reference to the block diagram of FIG. 1. As illustrated in FIG. 1, the system according to the present embodiment includes detachable devices 100a to 100d, image capturing apparatuses 110a to 110d, and an input/output apparatus 130. The image capturing apparatuses 110a to 110d and the input/output apparatus 130 are configured to be capable of mutual data communication via a network 120.

First, the image capturing apparatuses 110a to 110d will be described. The image capturing apparatuses 110a to 110d are image capturing apparatuses such as network cameras, and capture moving images or capture still images periodically or non-periodically. In a case of capturing still images periodically or non-periodically, the image capturing apparatuses 110a to 110d output the still images as captured images. On the other hand, in a case of capturing moving images, the image capturing apparatuses 110a to 110d output an image of each frame in the moving images as a captured image.

In the following description, unless each of the image capturing apparatuses 110a to 110d is distinguished, the image capturing apparatuses 110a to 110d are referred to as the image capturing apparatus 110. That is, the following description of the image capturing apparatus 110 can be applied to each of the image capturing apparatuses 110a to 110d in the same manner.

In the present embodiment, the image capturing apparatus 110 is assumed to have a built-in arithmetic apparatus capable of processing a captured image, but the present invention is not limited thereto. For example, an external computer such as a personal computer (PC) may be connected to the image capturing apparatus 110 as an arithmetic apparatus, and a combination of these may be treated as the image capturing apparatus 110.

Next, the detachable devices 100a to 110d will be described. A detachable device 100x (x = a to d) is a device (arithmetic apparatus) that is detachable from the image capturing apparatus 110x, stores an image captured by the image capturing apparatus 110x, and performs arithmetic processing including analysis processing on the captured image. For example, in a case where the image capturing apparatus 110x has "a slot in which a device capable of recording a captured image can be attached/detached", the detachable device 100x can be connected to the image capturing apparatus 110x by inserting the detachable device 100x into the slot.

In the following description, the detachable devices 100a to 100d are referred to as the detachable device 100, unless the respective detachable devices 100a to 100d are distinguished. Specifically, the detachable device 100 is a device detachable from the image capturing apparatus 110, and the following description of the detachable device 100 is equally applicable to each of the detachable devices 100a to 100d.

In the detachable device 100, for example, a device having a configuration in which a predetermined processing circuit is mounted on an SD card can be applied. The detachable device 100 may, for example, be configured to be entirely insertable into the image capturing apparatus 110 depending on the form of an SD card, and thereby, the detachable device 100 can be configured to be connectable to the image capturing apparatus 110 without a portion thereof protruding from the image capturing apparatus 110. Thus, it is possible to prevent the detachable device 100 from interfering with an obstacle such as wiring, and it is possible to increase the convenience at the time of use of the device. Also, since an SD card slot is provided in many existing image capturing apparatuses 110 such as network cameras, an extension function can be provided to the existing image capturing apparatus 110 by the detachable device 100. In the present embodiment, the detachable device 100 is described as a device that has a configuration in which a predetermined processing circuit is mounted on an SD card. However, rather than an SD card, the detachable device 100 may be configured to be attached to the image capturing apparatus 110 by any interface used when a storage apparatus capable of recording captured images captured by at least the image capturing apparatus 110 is attached. For example, the detachable device 100 may have a USB interface and be configured to be attached to a USB socket of the image capturing apparatus 110. The predetermined processing circuitry is also implemented, for example, by an FPGA (field programmable gate array) programmed to perform a predetermined process, but may be implemented in other forms. The operation frequency (clock) of the FPGA is generated by a quartz oscillator configured within the detachable device 100. Alternatively, a clock for SD communication may be used.

In the present embodiment, it is assumed that the detachable devices 100 are mounted on all of the four image capturing apparatuses 110 in FIG. 1. However, the system may include an image capturing apparatus 110 to which the detachable device 100 is not connected and is not limited to detachable devices 100 being mounted on all of the image capturing apparatus 110.

By the detachable device 100 having a function (arithmetic processing function) for executing arithmetic processing being mounted to the image capturing apparatus 110, it is possible to obtain the arithmetic processing result for the captured image by the image capturing apparatus 110 even if the image capturing apparatus 110 has no arithmetic processing function.

Further, as in the present embodiment, in the form in which the arithmetic apparatus is disposed in the image capturing apparatus 110, it is possible to diversify/improve image processing that can be executed on the image capturing apparatus 110 side by the detachable device 100, in which the arithmetic apparatus is disposed, being attached to the image capturing apparatus 110.

Next, the input/output apparatus 130 is described. The input/output apparatus 130 is an information processing apparatus (computer apparatus) such as a personal computer (PC), a smart phone, or a tablet terminal apparatus, and displays a captured image transmitted from the image capturing apparatus 110 or accepts input of various instructions from a user.

Next, the network 120 will be described. The network 120, for example, is configured to include a plurality of routers, switches, cables, and the like satisfying a communication standard such as Ethernet (registered trademark). In the present embodiment, the network 120 may be any network that enables communication between the image capturing apparatus 110 and the input/output apparatus 130, and may be constructed to be any size, configuration, or compliant communication standard. For example, the network 120 may be the Internet, a wired LAN (Local Area Network), a wireless LAN, a WAN (Wide Area Network), or the like. The network 120 may also be configured to allow for communication over, for example, an ONVIF (Open Network Video Interface Forum) standard compliant communication protocol. However, the present invention is not limited to this, and the network 120, for example, may be configured to allow communication in other communication protocols such as a unique communication protocol.

### <Configuration of Each Apparatus>

### (Configuration example of the image capturing apparatus 110)

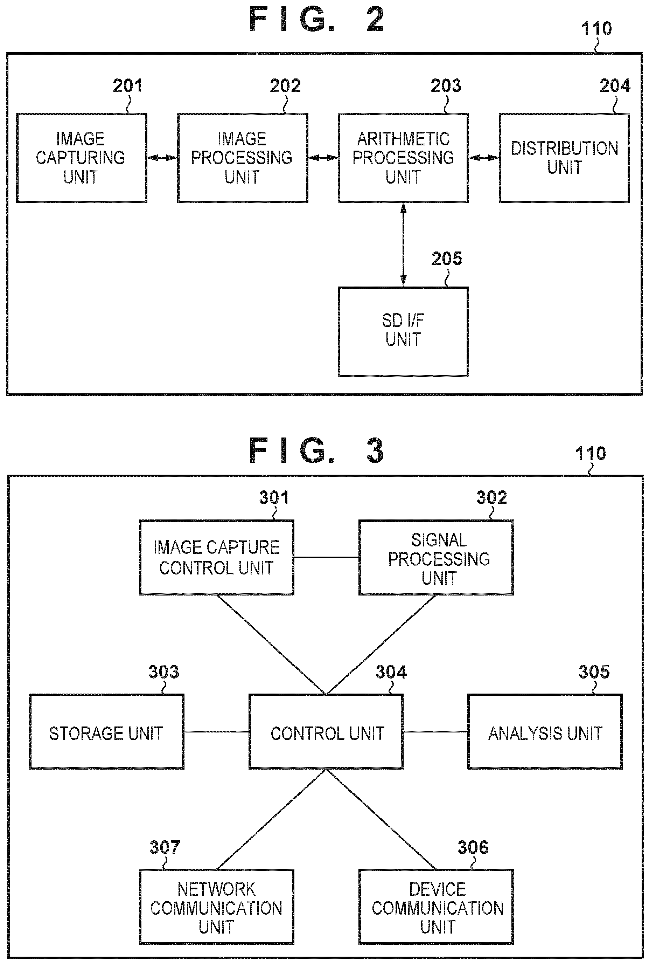

An example of a hardware configuration of the image capturing apparatus 110 is described with reference to the block diagram of FIG. 2. Note that FIG. 2 illustrates a main configuration related to the following description, and does not illustrate all the configurations of the image capturing apparatus 110.

An image capturing unit 201 includes a lens unit for focusing light, and an image capturing element for outputting an analog signal corresponding to the light focused by the lens unit. The lens unit has a zoom function for adjusting the angle of view, an aperture function for adjusting the amount of light, and the like. The image capturing element has a gain function for performing sensitivity adjustment when converting light into an analog signal. These functions are adjusted based on setting values output from the image processing unit 202.

An image processing unit 202 includes an A/D converter, an image processing engine, and peripheral devices thereof, and the like. The A/D converter converts the analog signal output from the image capturing unit 201 (image capturing element) into a digital signal. The image processing engine generates a captured image by performing image processing such as development processing, filtering processing, sensor correction, and noise removal on a RAW image represented by the digital signal. Also, the image processing engine may perform exposure adjustment so as to be able to transmit a set value to the lens unit or the image capturing element and obtain a captured image of an appropriate exposure. Peripheral devices include, for example, RAM (Random Access Memory), drivers for each I/F, and the like. The captured image is outputted to an arithmetic processing unit 203 via the peripheral device.

The arithmetic processing unit 203 includes one or more processors such as a CPU or an MPU, a memory such as a RAM or a ROM, a driver for each I/F, and the like. For example, the arithmetic processing unit 203 determines processes to be executed in the image capturing apparatus 110 and processes to be executed in the detachable device 100, and executes the processes determined as processes to be executed in the image capturing apparatus 110. The arithmetic processing unit 203 outputs information necessary for processing determined as processing to be executed in the detachable device 100 to the detachable device 100, and causes the detachable device 100 to execute the processing. The arithmetic processing unit 203 outputs the captured image to a distribution unit 204 and an SD I/F unit 205. Also, in a case where processing is performed on the captured image, the arithmetic processing unit 203 outputs the result of the processing to the distribution unit 204.

The distribution unit 204 includes a network distribution engine and a peripheral device such as a RAM or an ETH PHY module, for example. An ETH PHY module is a module that performs Ethernet physical (PHY) layer processing. The distribution unit 204 converts the captured image and the result of processing output from the arithmetic processing unit 203 into "data in a format that can be distributed to the network 120", and transmits the converted data to the input/output apparatus 130 via the network 120.

An SD I/F unit 205 is an interface for connecting to the detachable device 100, for example, and includes a power supply and a mounting mechanism such as an attachment-detachment socket for attaching and detaching the detachable device 100. Here, it is assumed that the SD I/F unit 205 is configured in accordance with the SD standard established by the SD Association. The image capturing apparatus 110 performs data communication with the detachable device 100 via the SD I/F unit 205.

Next, an example of a functional configuration of the image capturing apparatus 110 is described with reference to the block diagram of FIG. 3. Functional units illustrated in FIG. 3 may be implemented as hardware incorporated in any of the functional units illustrated in FIG. 2, or may be implemented as software executed by any of the functional units illustrated in FIG. 2.

An image capture control unit 301 performs operation control of the image capturing unit 201; for example, the image capture control unit 301, based on the above set value, performs operation control of the image capturing unit 201 so that the image capturing unit 201 captures the surrounding environment in an appropriate exposure state.

A signal processing unit 302 generates a captured image as described above from the analog signal output from the image capturing unit 201 controlled by the image capture control unit 301. The signal processing unit 302 may encode the generated captured image. When the image capturing unit 201 captures a still image, the signal processing unit 302 encodes the still image using, for example, an encoding method such as JPEG (Joint Photographic Experts Group). When the image capturing unit 201 captures a moving image, the signal processing unit 302 encodes the moving image using an encoding method such as H.264/MPEG-4 AVC (hereinafter referred to as "H.264") or HEVC (High Efficiency Coding). Further, the signal processing unit 302 may perform encoding from among a plurality of preset coding schemes using an encoding scheme selected by the user, for example, through an operation unit (not illustrated) of the image capturing apparatus 110.

A storage unit 303 stores a list of analysis processes executable by the analysis unit 305 (hereinafter, referred to as a first process list) and a list of processes for post-processing on the results of the analysis processing. The storage unit 303 stores the results of analysis processes performed by the analysis unit 305.

Note, in the present embodiment, the process to be executed is an analysis process, but any process may be executed, and the storage unit 303 stores the first process list and the post-process list for the processes related to the processing to be executed.

A control unit 304 performs operation control of the image capturing apparatus 110, and for example, performs operation control of each functional unit illustrated in FIG. 3. The analysis unit 305 selectively executes at least one of pre-analysis processing, analysis processing, and post-analysis processing on the captured image generated by the signal processing unit 302.

The pre-analysis processing is processing to be executed on the captured image before executing the analysis processing on the captured image. In the pre-analysis processing of the present embodiment, as an example, a process of dividing a captured image and creating a divided image is performed.

The analysis process is a process of outputting information obtained by analyzing an input image. In the analysis processing of the present embodiment, as an example, it is assumed that a divided image obtained by pre-analysis processing is used as an input image, analysis processing such as at least one of human body detection processing, face detection processing, and/or vehicle detection processing is performed on the input image, and the result of the analysis processing is output. The analysis processing may be processing configured to output the position of an object in the divided image using a learned machine learning model so that an object included in the image can be detected by, for example, a conventional technique.

Post-analysis processing is a process executed after analysis processing is executed. In the post-analysis processing of the present embodiment, as an example, a process of outputting a total of the number of objects detected in each divided image as a "result of the analysis process" is executed based on the result of the analysis processing for each divided image. The analysis process may be a process of detecting an object in an image by performing pattern matching and outputting the position of the object. In the present embodiment, these processes (pre-analysis processing, analysis processing, and post-analysis processing) are collectively referred to as analysis processing in some cases.

A device communication unit 306 performs data communication with the detachable device 100 via the SD I/F unit 205. The device communication unit 306 converts transmission data provided as data to be transmitted to the detachable device 100 into transmission data in a format that can be processed by the detachable device 100. Then the device communication unit 306 transmits the converted transmission data to the detachable device 100 via the SD I/F unit 205. The device communication unit 306 receives data transmitted from the detachable device 100, and converts the received data into data in a format that can be processed by the image capturing apparatus 110. In the present embodiment, the device communication unit 306 executes a process of converting a decimal number between a floating-point format and a fixed-point format as a conversion process, but the present invention is not limited to this, and other processes may be executed by the device communication unit 306. Also, in the present embodiment, it is assumed that the device communication unit 306 performs communication with the detachable device 100 by transmitting a predetermined command sequence within a range of the SD standard to the detachable device 100 and receiving a response from the detachable device 100. A network communication unit 307 performs data communication with the input/output apparatus 130 which is on the network 120 via the distribution unit 204.

### <Example of Configuration of Detachable Device 100>

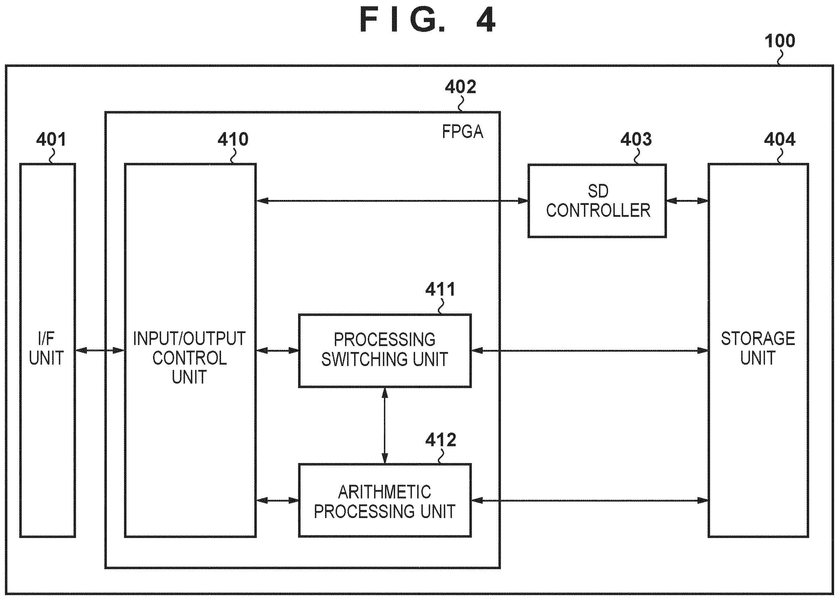

Next, an example of the hardware configuration of the detachable device 100 is described with reference to the block diagram of FIG. 4. Note that FIG. 4 illustrates a main configuration related to the following description, and does not illustrate all the configurations of the detachable device 100.

The detachable device 100 has an arithmetic apparatus, and the arithmetic apparatus is configured by an FPGA or the like. The detachable device 100 is of a shape that can be the inserted/removed into/from the attachment-detachment socket of the SD I/F unit 205 that the image capturing apparatus 110 has, that is, it is molded in a shape conforming to the SD standard.

An I/F unit 401 is an interface portion for connecting an apparatus such as an image capturing apparatus 110 and the detachable device 100. The I/F unit 401, for example, is configured to include an electrical contact terminal or the like that receives a power supply from the image capturing apparatus 110 and generates and distributes the power supply for use in the detachable device 100. Like the SD I/F unit 205 of the image capturing apparatus 110, the I/F unit 401 complies with items defined in (compliant with) the SD standard. The detachable device 100 receives various data such as a captured image transmitted from the image capturing apparatus 110 via the I/F unit 401. Also, the detachable device 100 transmits the data outputted from the FPGA 402 to the image capturing apparatus 110 via the I/F unit 401.

The FPGA 402 is a type of semiconductor device that can repeatedly reconfigure an internal logic circuit structure and, by a process implemented by the FPGA 402, can add (provide) a processing function to the apparatus on which the detachable device 100 is mounted. Also, the FPGA 402 reconfiguration function allows the logic circuit structure to be changed later, so that attaching the detachable device 100 to a type of apparatus for which technology advances rapidly, for example, enables the apparatus to execute the appropriate processing in a timely manner. In the present embodiment, an example in which an FPGA is used will be described, but a general-purpose ASIC or a dedicated LSI may be used, for example, as long as a process described later can be realized. The FPGA 402 is activated by configuration data (hereinafter, referred to as the configuration data) including the information of a structure of the logic circuit configured by this to be generated being written from a dedicated I/F, or by configuration data being read from the dedicated I/F. In the present embodiment, it is assumed that this configuration data is held in the storage unit 404. When the power is turned on, the FPGA 402 reads the configuration data from the storage unit 404 and configures (generates) and starts the logic circuit in accordance with the configuration data. However, the present invention is not limited thereto, and by mounting a dedicated circuit in the detachable device 100, for example, the image capturing apparatus 110 may write the configuration data to the FPGA 402 via the I/F unit 401. In the present embodiment, the FPGA 402 (the arithmetic processing unit 412) performs arithmetic processing that uses the above-mentioned logic circuit on a captured image received from the image capturing apparatus 110 via the I/F unit 401, and outputs the result of the arithmetic processing.

An input/output control unit 410 is configured to include a circuit for controlling transmission/reception of data to/from the image capturing apparatus 110, a circuit for analyzing a command received from the image capturing apparatus 110, and a circuit for performing control based on the result of analysis of a command or the like. Commands are defined in the SD standard, and the input/output control unit 410 can detect some of them. Details of functions will be described later.

The input/output control unit 410, when performing processing for storing a captured image received from the image capturing apparatus 110, outputs the captured image to the SD controller 403. The input/output control unit 410, when performing processing for analyzing the captured image received from the image capturing apparatus 110, outputs the captured image to the arithmetic processing unit 412. Further, the input/output control unit 410, when receiving the configuration data of the switching of the processing from the image capturing apparatuses 110, outputs the configuration data to the processing switching unit 411.

The processing switching unit 411 is configured to include a circuit that, based on the configuration data received from the image capturing apparatus 110, obtains, from the storage unit 404, information of arithmetic processing functions including processing for analyzing a captured image, and writes that information to arithmetic processing unit 412. The information is, for example, a setting parameter indicating the order and type of calculations to be executed in the arithmetic processing unit 412, calculation coefficients, and the like. The setting parameter is a learned model (parameter) learned using Deep Learning method, and hereinafter, this setting parameter is referred to as a DL model.

The arithmetic processing unit 412 is configured to include a plurality of arithmetic circuits necessary for executing the analysis processing for the captured image. The arithmetic processing unit 412, using a DL model, executes various arithmetic processing based on the information received from the processing switching unit 411, transmits the result of the arithmetic processing on the captured image to the input/output control unit 410, and stores the result in the storage unit 404.

In this manner, the FPGA 402 rewrites the processing content executed by the arithmetic processing unit 412 based on the configuration data and the DL model. As a result, the detachable device 100 can selectively execute at least one of the plurality of processing functions. Further, by adding the configuration data and DL model of the process to be newly added as needed, the latest process can be executed on the image capturing apparatus 110 side.

In the following, having a plurality of setting data corresponding to each of the plurality of processing functions is expressed as having a plurality of processing functions. That is, even when the FPGA 402 of the detachable device 100 is configured to execute one processing function, when it is possible to change the processing content of the arithmetic processing unit 412 by the setting data for another processing function, it is expressed as having a plurality of processing functions.

The SD controller 403 is a well-known control IC (integrated circuit) defined in the SD standard, and executes control of slave operation of the SD protocol and control of reading and writing of data from and to the storage unit 404. For example, the SD controller 403 writes data output from the input/output control unit 410 to the storage unit 404, and outputs data read from the storage unit 404 to the input/output control unit 410.

The storage unit 404 is, for example, a memory such as a NAND flash memory. The storage unit 404 may be a nonvolatile memory, a volatile memory, or a plurality of memories including both of them. The storage unit 404 stores various types of information such as data transmitted from the image capturing apparatus 110, information of a function of arithmetic processing by the FPGA 402, and a result of the arithmetic processing.

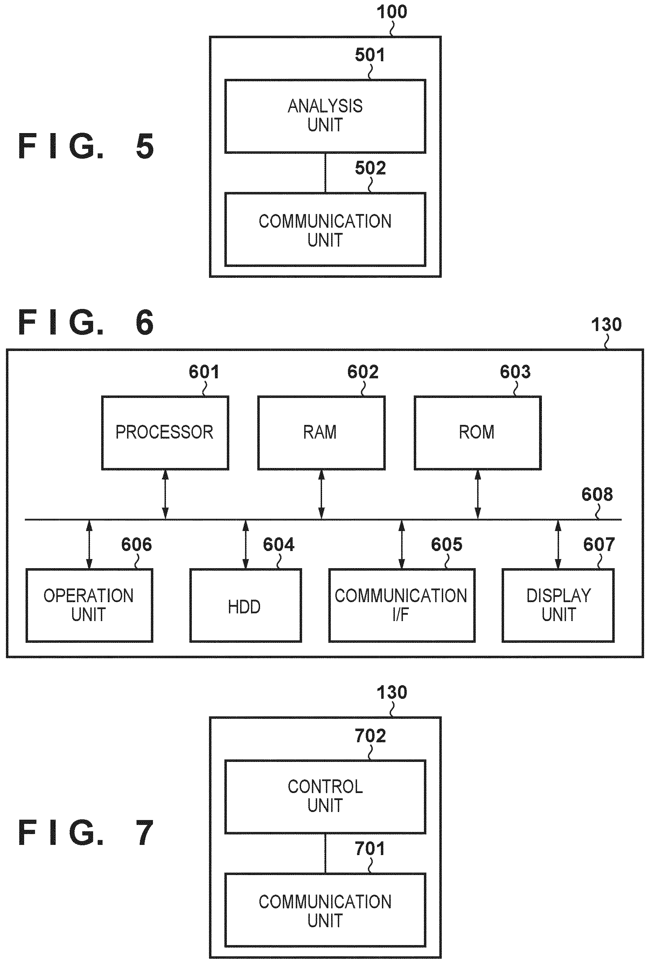

Next, an example of a functional configuration of the detachable device 100 is described with reference to the block diagram of FIG. 5. Functional units illustrated in FIG. 5 may be implemented as hardware incorporated in any of the functional units illustrated in FIG. 4, or may be implemented as software executed by any of the functional units illustrated in FIG. 4.

The analysis unit 501 executes various arithmetic processes including analysis processing on the captured image received from the image capturing apparatus 110. For example, when receiving a setting request for an analysis process, the analysis unit 501 executes a setting for making the analysis process executable. Further, the analysis unit 501, after receiving a captured image and an arithmetic processing command, executes the arithmetic processing including analysis processing that is set to be executable on the captured image. In the present embodiment, the executable analysis processing is assumed to be human body detection processing and face detection processing, but the present invention is not limited to these. For example, the processing may be for determining whether a person stored in advance is included in the captured image (laterdescribed face authentication processing). Further, for example, it may be a process of calculating a degree of coincidence between an image feature amount of a person stored in advance and an image feature amount of a person detected from an inputted captured image, and determining that the person detected is the person stored in advance when the degree of coincidence is equal to or greater than a threshold value. For example, for the purpose of privacy protection, a predetermined mask image may be superimposed onto a person detected in an inputted captured image, or mosaic processing may be performed for a person detected in an inputted captured image. Further, for example, processing for detecting whether or not a person in a captured image is performing a specific action by using a learning model in which a specific action of a person is learned by machine learning is possible. Also, the executable analysis processing may be a process of determining what kind of region the region in the captured image is, for example. Also, the executable analysis processing may be processing for using a learning model in which a building, a road, a person, the sky, or the like is learned by machine learning to determine what kind of region a region within a captured image is, for example.

As described above, the executable analysis processing can be applied to analysis processing using the machine learning or analysis processing not using the machine learning. The above analysis processes are not limited to being performed by the detachable device 100 alone, and may be performed in cooperation with the image capturing apparatus 110. A communication unit 502 controls data communication with the image capturing apparatus 110 via the I/F unit 401.

### (Configuration example of the input/output apparatus 130)

Next, an example of the hardware configuration of the input/output apparatus 130 is described with reference to the block diagram of FIG. 6. Note that FIG. 6 illustrates a main configuration related to the following description, and does not illustrate all the configurations of the input/output apparatus 130.

A processor 601 is a processor such as a CPU, an MPU, or a GPU, and executes various kinds of processing using a computer program or data stored in a RAM 602 or a ROM 603. As a result, the processor 601 controls the operation of the entire the input/output apparatus 130, and executes or controls each of the types of process described as being performed by the input/output apparatus 130.

The RAM 602 includes a region for storing computer programs and data loaded from a ROM 603 or an HDD (hard disk drive) 604, and a region for storing data received from the image capturing apparatus 110 via a communication I/F 605. The RAM 602 also includes a work area used by the processor 601 to execute various processing. In this manner, the RAM 602 can appropriately provide various regions.

The ROM 603 stores setting data of the input/output apparatus 130, a computer program and data related to activation of the input/output apparatus 130, a computer program and data related to basic operation of the input/output apparatus 130, and the like.

The HDD 604 stores an operating system (OS), computer programs for causing the processor 601 to execute various kinds of processes described performed by the input/output apparatus 130, data, and the like. Computer programs and data stored in the HDD 604 are loaded into the RAM 602 as appropriate in accordance with the control of the processor 601 and are processed by the processor 601.

The communication I/F 605 is a communication interface for connecting the input/output apparatus 130 to the above-described network 120, and the input/output apparatus 130 performs data communication with the image capturing apparatus 110 on the network 120 via a communication I/F 605.

An operation unit 606 is a user interface such as a keyboard, a mouse, or a touch panel, and can input various instructions to the processor 601 when operated by a user.

A display unit 607 has a liquid crystal screen or a touch panel screen, and displays a result of processing by the processor 601 in the form of an image, text, or the like. The display unit 607 may be a projection apparatus such as a projector for projecting an image or text.

The processor 601, the RAM 602, the ROM 603, the HDD 604, the communication I/F 605, the operation unit 606, and the display unit 607 are all connected to a system bus 608. In the configuration of FIG. 6, the method of presenting the information to the user is display by the display unit 607, but the method of presenting the information to the user is not limited to a specific presentation method, and the presentation of information may instead or additionally be performed by voice or vibration.

The input of instructions and information to the input/output apparatus 130 may be by voice input, or may be by gesture input (a gesture by the user is recognized and an instruction or information corresponding to the recognized gesture is input). That is, the method of inputting information to the input/output apparatus 130 is not limited to a specific input method.

Next, an example of a functional configuration of the input/output apparatus 130 is described with reference to the block diagram of FIG. 7. The functional portion illustrated in FIG. 7 may be implemented as hardware or as software. In the latter case, the software is stored in the HDD 604, loaded into the RAM 602 as needed, and executed by the processor 601.

A communication unit 701 controls the communication I/F 605 and performs data communication with the image capturing apparatus 110 via the network 120. It should be noted that this is merely an example, and for example, the communication unit 701 may be configured to establish a direct connection with the image capturing apparatus 110 and communicate with the image capturing apparatus 110 without going through the network 120 or other apparatuses. The control unit 702 performs operation control of the input/output apparatus 130.

### <Flow of Processing in System>

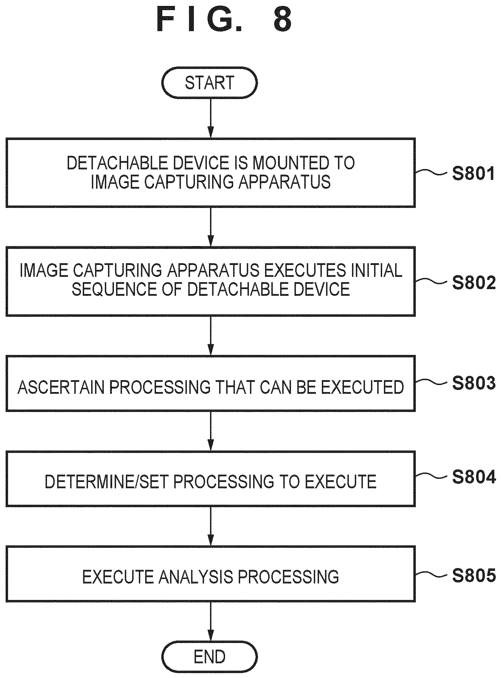

Next, an outline of the operation of the system according to the present embodiment will be described with reference to the flowchart of FIG. 8. Processing according to the flowchart of FIG. 8 is started when it is detected by communication between the image capturing apparatus 110 and the detachable device 100 (the method of detection is not limited thereto) that the detachable device 100 is mounted to the image capturing apparatus 110.

First, in step S801, the user mounts the detachable device 100 to the image capturing apparatus 110. In step S802, the arithmetic processing unit 203 executes an initialization sequence of the detachable device 100. In this initialization sequence, when a predetermined command is transmitted/received between the image capturing apparatus 110 and the detachable device 100, the image capturing apparatus 110 enters a state in which the detachable device 100 is usable.

In step S803, the arithmetic processing unit 203 ascertains what processing the detachable device 100 can execute from the above list stored in the storage unit 303, and ascertains what processing can be executed by the image capturing apparatus 110 on its own or by the image capturing apparatus 110 in combination with the detachable device 100. The detachable device 100 may be configured to be capable of executing any processing, but processing unrelated to processing to be executed on the image capturing apparatus 110 side need not be considered. In one example, the image capturing apparatus 110 retains a "list of processes that may be performed" obtained in advance from, for example, the input/output apparatus 130. In this case, when the information indicating the processing that can be executed by the detachable device 100 is obtained from the detachable device 100, it is possible for the image capturing apparatus 110 to ascertain only the processing that can be executed according to whether or not the processing is included in the list.

Next, in step S804, the arithmetic processing unit 203 determines processing to be executed, and executes setting of the detachable device 100 as required. That is, when at least a part of processing determined to be an execution target is executed by the detachable device 100, a setting of the detachable device 100 for the processing is executed. In this setting, for example, a logic circuit of the FPGA 402 can be reconfigured using configuration data corresponding to the process to be executed. Next, in step S805, the arithmetic processing unit 203 and/or the arithmetic processing unit 412 executes the analysis processing (pre-analysis processing, analysis processing, post-analysis processing) and arithmetic processing.

The processing of FIG. 8 is executed, for example, when the detachable device 100 is mounted on the image capturing apparatus 110. However, at least a part of the processing of FIG. 8 may be repeatedly executed, such as when the processing of step S803 is executed again when the detachable device 100 is detached from the image capturing apparatus 110.

### (Process for determining whether the configuration data and DL model are appropriate)

As described above, the configuration data and the DL model are stored in the storage unit 404, and the image capturing apparatus 110 can update the configuration data and the DL model to the latest configuration data and the DL model. However, when the latest configuration data and DL model updated in the storage unit 404 are "configuration data and a DL model supported by the FPGA 402", the FPGA 402 cannot be successfully started or operated. In order to avoid such a situation, it is possible to check whether or not the latest configuration data and the DL model to be updated are supported by the FPGA 402 prior to the update, and after it is determined that the DL model is supported, the update is performed.

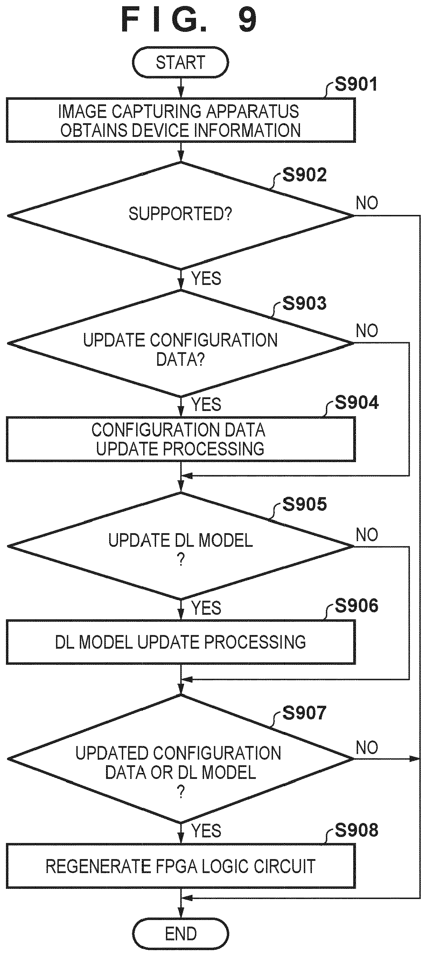

Update processing with such a check will be described with reference to the flowchart of FIG. 9. The process according to the flowchart of FIG. 9 is performed in the above-described step S804. Processing according to the flowchart of FIG. 9 may be executed when the detachable device 100 is mounted on the image capturing apparatus 110 or in the case where data communication between the image capturing apparatus 110 and the detachable device 100 becomes possible when the power of the image capturing apparatus 110 is turned on.

In step S901, the control unit 304 of the image capturing apparatus 110 transmits a request to transmit device information of the detachable device 100 to the detachable device 100 via the device communication unit 306.

The device information of the detachable device 100 includes information on the type and number of chips in the FPGA 402, information on the memory capacity of the storage unit 404, configuration data stored in the storage unit 404, information on DL models, and the like. The device information of the detachable device 100 includes information on an operating frequency, a bus width, and the like for when data is transmitted and received between the I/F unit 401 and the input/output control unit 410 in hardware, between the input/output control unit 410 and the SD controller 403, or the like.

The input/output control unit 410 receives the "device information transmission request" transmitted from the image capturing apparatus 110 via the I/F unit 401, and controls the SD controller 403 to obtain device information corresponding to the transmission request from the storage unit 404. The input/output control unit 410 transmits the obtained device information to the image capturing apparatus 110 via the I/F unit 401.

In step S902, the control unit 304 of the image capturing apparatus 110 receives the device information transmitted from the detachable device 100 via the device communication unit 306. Then, the control unit 304 determines whether each of the latest configuration data and DL model stored in the storage unit 303 are supported by the detachable device 100 using the device information received from the detachable device 100. There are various methods for this determination, and the method is not limited to a specific method.

For example, the control unit 304 refers to "information on the type and number of chips in the FPGA 402" included in the device information. Then, the control unit 304 determines whether or not "a logic circuit based on the latest configuration data and DL model stored in the storage unit 303" can be generated by the number of chips represented by the information of the type represented by the information. When the result of this determination is that the logic circuit can be generated, the control unit 304 determines that "the latest configuration data and the DL model stored in the storage unit 303 respectively are supported by the detachable device 100". Meanwhile, when the result of this determination is that the logic circuit cannot be generated, the control unit 304 determines that "the latest configuration data and the DL model stored in the storage unit 303 respectively are not supported by the detachable device 100".

Also, for example, the control unit 304 references "information of the memory capacity of the storage unit 404" included in the device information. Then, the control unit 304 determines whether or not "the latest configuration data and DL model stored in the storage unit 303" can be written in the storage unit 404 of the memory capacity represented by the information. When the result of this determination is they can be written, the control unit 304 determines that "the latest configuration data and the DL model stored in the storage unit 303 respectively are supported by the detachable device 100". Meanwhile, when the result of this determination is that they cannot be written, the control unit 304 determines that "the latest configuration data and the DL model stored in the storage unit 303 respectively are not supported by the detachable device 100".

By such a determination process, it is possible to prevent a situation in which the configuration data and the DL model stored in the storage unit 404 are updated to configuration data and a DL model with which the FPGA 402 cannot be started. It should be noted that the above determination processing may be performed by combining two or more.

If the result of the determination is that "the latest configuration data and DL model stored in the storage unit 303 are respectively supported by the detachable device 100", the processing advances to step S903. Meanwhile, it is determined that the latest configuration data and DL model stored in the storage unit 303 are respectively not supported by the detachable device 100", the processing according to the flowchart of FIG. 9 ends.

In step S903, the control unit 304 determines whether or not to update the configuration data stored in the storage unit 404 to the latest configuration data stored in the storage unit 303 based on the "information related to the configuration data" included in the device information.

For example, the control unit 304 determines to perform an update in a case where the "version information of the configuration data stored in the storage unit 404" included in the information related to the configuration data is different from the version information of the latest configuration data stored in the storage unit 303. Meanwhile, the control unit 304 determines to not perform an update in a case where the "version information of the configuration data stored in the storage unit 404" included in the information related to the configuration data is the same as the version information of the latest configuration data stored in the storage unit 303.

An identifier of the configuration data may be used instead of version information of the configuration data, or the configuration data itself may be used, and the information used in the determination in the step S903 is not limited to the specific information.

By such determination processing, it is possible to avoid the processing to update the configuration data in a case where the latest configuration data has already been stored in the storage unit 404 of the detachable device 100.

When the result of such determination is that the configuration data stored in the storage unit 404 is to be updated to the latest configuration data stored in the storage unit 303, the processing proceeds to step S904.

Meanwhile, when the result of such determination is that the configuration data stored in the storage unit 404 is not to be updated to the latest configuration data stored in the storage unit 303, the processing proceeds to step S905.

In step S904, the control unit 304 performs an update control process for updating the configuration data stored in the storage unit 404 to the latest configuration data stored in the storage unit 303. More specifically, the control unit 304 reads the latest configuration data stored in the storage unit 303, and transmits the read configuration data to the detachable device 100 via the device communication unit 306. The input/output control unit 410 of the detachable device 100 receives the latest configuration data transmitted from the image capturing apparatus 110 via the I/F unit 401, controls the SD controller 403, and writes the received latest configuration data into the storage unit 404.

In step S905, the control unit 304 determines whether or not to update the DL model stored in the storage unit 404 to the latest DL model stored in the storage unit 303 based on the "information related to the DL model" included in the device information.

For example, the control unit 304 determines to perform an update in a case where the "version information of the DL model stored in the storage unit 404" included in the information related to the DL model is different from the version information of the latest DL model stored in the storage unit 303. Meanwhile, the control unit 304 determines to not perform an update in a case where the "version information of the DL model stored in the storage unit 404" included in the information related to the DL model is the same as the version information of the latest DL model stored in the storage unit 303.

An identifier of the DL model may be used instead of the version information of the DL model, or the DL model itself may be used, and the information used in determining step S905 is not limited to the particular information. By such determination processing, it is possible to avoid the processing to update the DL model in a case where the latest DL model has already been stored in the storage unit 404 of the detachable device 100.

When the result of such determination is that the DL model stored in the storage unit 404 is to be updated to the latest DL model stored in the storage unit 303, the processing proceeds to step S906.

Meanwhile, when the result of such determination is that the DL model stored in the storage unit 404 is not to be updated to the latest DL model stored in the storage unit 303, the processing proceeds to step S907.

In step S906, the control unit 304 performs an update control process for updating the DL model stored in the storage unit 404 to the latest DL model stored in the storage unit 303. More specifically, the control unit 304 reads the latest DL model stored in the storage unit 303, and transmits the read DL model to the detachable device 100 via the device communication unit 306. The input/output control unit 410 of the detachable device 100 receives the latest DL model transmitted from the image capturing apparatus 110 via the I/F unit 401, controls the SD controller 403, and writes the received latest DL model into the storage unit 404.

In step S907, the control unit 304 determines whether or not at least one of the configuration data and the DL model has been updated (the latest version of the configuration data/DL model has been written in the storage unit 404). When the result of this determination is that at least one of the configuration data and the DL model is updated, the process proceeds to step S908, and when neither the configuration data nor the DL model is updated, the process according to the flowchart of FIG. 9 ends.

In step S908, the processing switching unit 411 generates (regenerates) a logic circuit of a structure based on the configuration data stored in the storage unit 404, and writes the DL model stored in the storage unit 404 into the arithmetic processing unit 412. As a result, the arithmetic processing of the arithmetic processing unit 412 is updated. At this time, the input/output control unit 410 updates "the information related to configuration data" included in the device information stored in the storage unit 404 to "information related to the updated configuration data". At this time, the input/output control unit 410 updates "the information related to the DL model" included in the device information stored in the storage unit 404 to "information related to the updated DL model".

### [Second Embodiment]

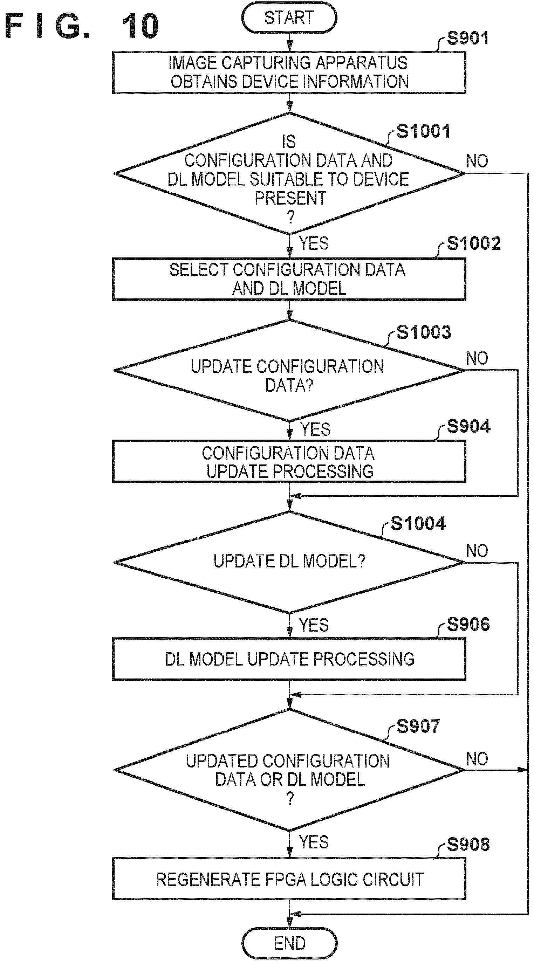

In each of the following embodiments including the present embodiment, only differences from the first embodiment will be described, and unless specifically mentioned below, the embodiment is assumed to be the same as in the first embodiment. In the present embodiment, update processing including checking of the configuration data and the DL model in a case where a plurality of sets of configuration data and a DL model are stored in the storage unit 303 will be described. The update processing including a check according to the present embodiment will be described with reference to the flowchart of FIG. 10. The processing steps in FIG. 10 that are the same as processing steps in FIG. 9 are denoted by the same step numbers, and description according to these processing steps is omitted.

In step S1001, the control unit 304 determines whether or not configuration data and DL models suitable to the detachable device 100 are stored in the storage unit 303 based on the device information received in step S901.

Various forms of determination in step S1001 are conceivable, and the present invention is not limited to a particular form. For example, it is assumed that the "operation frequency of the FPGA 402" is stored in the device information. In this case, in step S1001, it may be determined whether configuration data in which an operating frequency within a certain range from "the operation frequency of the FPGA 402" is defined is stored in the storage unit 303. For example, it is assumed that the "memory capacity of the FPGA 402" is stored in the device information. In this case, in step S1001, it may be determined whether configuration data in which a memory capacity within a certain range from the "memory capacity of the FPGA 402" is defined is stored in the storage unit 303.

When the result of the determination is that configuration data and a DL model suitable for the detachable device 100 are stored in the storage unit 303, the process proceeds to step S1002. Meanwhile, when the configuration data and the DL model suitable for the detachable device 100 are not stored in the storage unit 303, the processing according to the flowchart of FIG. 10 ends.

In step S1002, the control unit 304 reads (selects) one configuration data and one DL model from the storage unit 303 from the "configuration data and DL model suitable for the detachable device 100" determined to be stored in the storage unit 303 in step S1001. For example, the control unit 304 reads out from the storage unit 303 one configuration data having the highest FPGA 402 operating frequency among "configuration data suitable for the detachable device 100". Further, for example, the control unit 304 reads one DL model having the highest detection accuracy (information on the DL model) out of the "DL models suitable for the detachable device 100" from the storage unit 303. In addition, the configuration data and the DL model may be read from the storage unit 303 based on the memory capacity, the analysis time, and the like.

In step S1003, the control unit 304 determines whether or not to update the configuration data stored in the storage unit 404 to the "configuration data read in step S1002" based on the "information related to the configuration data" included in the device information. The method of determination in step S1003 is the same as the method of determination in step S903 described above, and therefore explanation thereof is omitted.

When the result of such determination is that the configuration data stored in the storage unit 404 is to be updated to the "configuration data read in step S1002", the processing proceeds to step S904.

Meanwhile, when the result of such determination is that the configuration data stored in the storage unit 404 is not to be updated to the "configuration data read in step S1002", the processing proceeds to step S1004.

In step S1004, the control unit 304 determines whether or not to update the DL model stored in the storage unit 404 to the "DL model read in step S1002" based on the "information related to the DL model" included in the device information. The method of determination in step S1004 is the same as the method of determination in step S905 described above, and therefore explanation thereof is omitted.

When the result of such determination is that the DL model stored in the storage unit 404 is to be updated to the "DL model read in step S1002", the processing proceeds to step S906.

Meanwhile, when the result of such determination is that the DL model stored in the storage unit 404 is not to be updated to the "DL model read in step S1002", the processing proceeds to step S907.

### [Third Embodiment]

In general, the accuracy of the DL model detection processing (detection accuracy) and the time required for the detection processing (detection time) are often in a trade-off relationship. Further, the user's demands vary depending on the use case, such as a case where the detection accuracy is to be increased even if the detection time takes some time, or a case where the detection time is to be shortened even if the detection accuracy is to be slightly lowered. Therefore, it may be better to allow the user to select the configuration data and DL model to be updated.

In the present embodiment, a plurality of "combinations of configuration data and DL model" obtained from a plurality of configuration data and a plurality of DL models stored in the storage unit 303 are displayed in a list on the display unit 607 of the input/output apparatus 130. Then, the user operation related to the selection of the configuration data and the DL model to be used for updating is accepted.

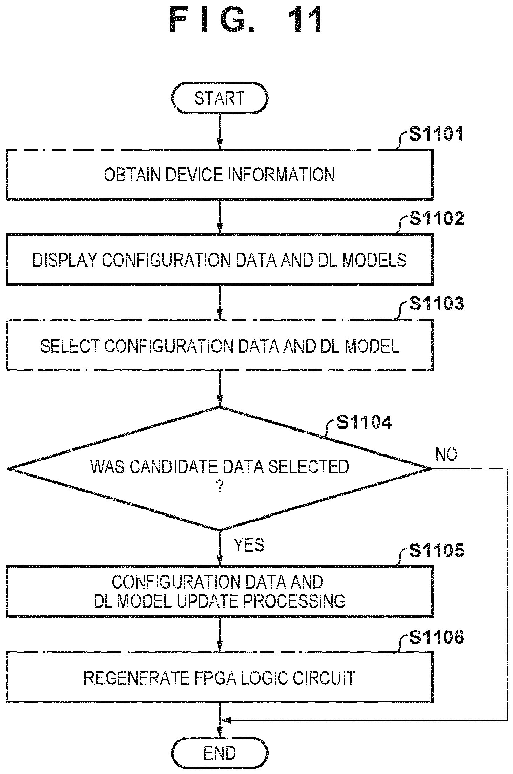

The update processing including a check according to the present embodiment will be described with reference to the flowchart of FIG. 11. In step S1101, the control unit 304 obtains the device information described above by performing the same process as in step S901 described above. Incidentally, when the detachable device 100 has a plurality of the FPGA 402, the control unit 304 obtains device information for each FPGA 402. Then the control unit 304 transmits the obtained device information to the input/output apparatus 130 via the network communication unit 307. The processor 601 in the input/output apparatus 130 receives the device information via a communication I/F 605.

In step S1102, the control unit 304 reads out a plurality of configuration data and a plurality of DL models stored in the storage unit 303. The control unit 304 transmits the plurality of configuration data and the plurality of DL models read from the storage unit 303 to the input/output apparatus 130 via the network communication unit 307. The processor 601 in the input/output apparatus 130 receives the plurality of configuration data and the plurality of DL models transmitted from the image capturing apparatus 110 via the communication I/F 605.

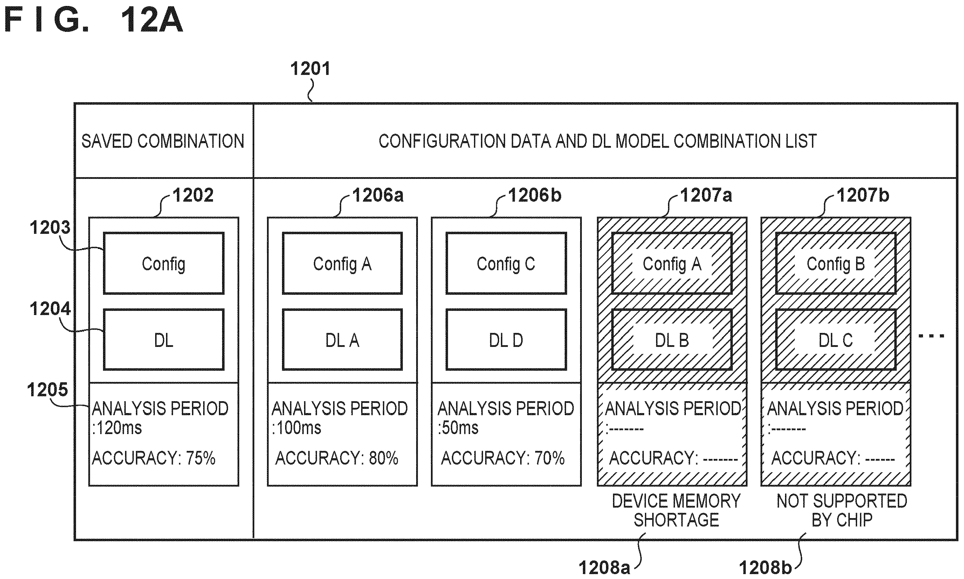

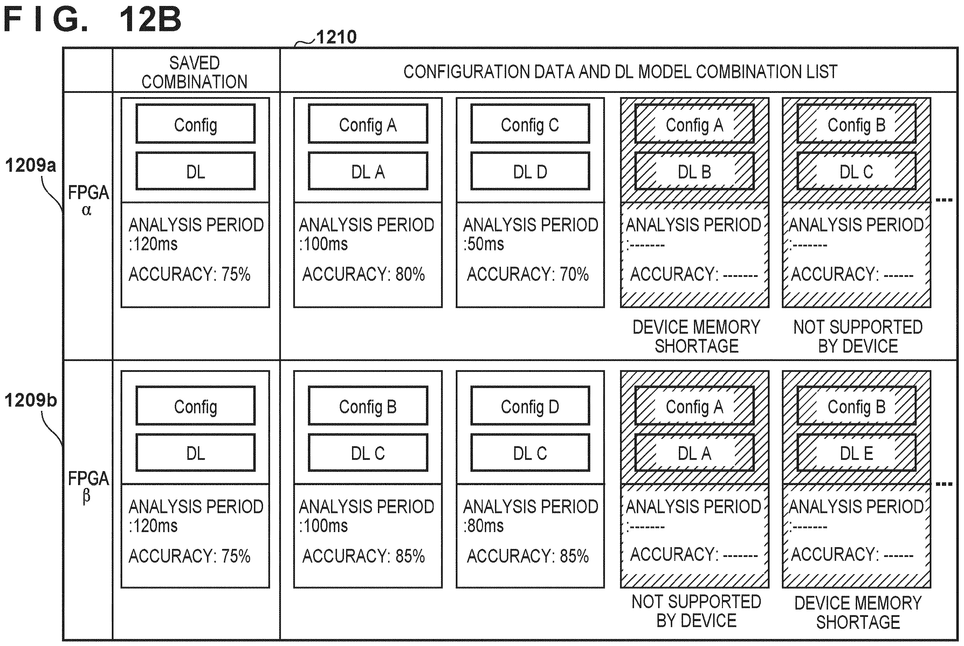

Then, the processor 601 generates a screen 1201 exemplified in FIG. 12A or a screen 1210 exemplified in FIG. 12B based on the configuration data, the DL model, and the device information received from the image capturing apparatus 110 and displays it on the display unit 607.

A screen 1201 of FIG. 12A is one example of a screen displayed in a case where the detachable device 100 has one FPGA 402. A screen 1210 of FIG. 12B is one example of a screen displayed in a case where the detachable device 100 has a plurality of the FPGA 402.

First, the screen 1201 of FIG. 12A will be described. To generate the screen 1201, the processor 601 first generates a plurality of "combinations of configuration data and DL model" from the plurality of configuration data and the plurality of DL models received from the image capturing apparatus 110. Then, the processor 601 obtains a result of evaluating the performance of each of the plurality of combinations when the FPGA 402 (logic circuit) is operated in the combination. Then, the processor 601 generates a screen 1201 including the performance evaluation result obtained for each of the plurality of combinations and displays it on the display unit 607. The user operates the operation unit 606 to select one combination from a plurality of combinations displayed on the screen 1201 as a combination of the configuration data and the DL model used for updating.

A display region 1202 of "saved combination" is displayed on the screen 1201. In the display region 1202, a region 1203, a region 1204, and a region 1205 are provided.

The region 1203 is a region in which the name of the configuration data (configuration data corresponding to the present logic circuits) stored in the storage unit 404 is displayed (the name of the FPGA 402 chip may be displayed).

The region 1204 is a region in which the name of the DL model (the DL model set as the one used by the arithmetic processing unit 412) stored in the storage unit 404 is displayed (the name of the detection target may be displayed).

A region 1205 is a region in which is displayed reference information indicating a result of evaluating the performance of the FPGA 402 when the configuration data of the name displayed in the region 1203 and the DL model of the name displayed in the region 1204 are used. For example, from the operating frequency and bus width of the chip of the FPGA 402 included in the device information and the number of cycles of the DL model, an analysis period is derived, and the analysis period may be displayed as reference information. For example, the detection accuracy included in the DL model information included in the device information may be displayed as reference information.

On the screen 1201, display regions 1206a, 1206b, 1207a, and 1207b of "combination of configuration data and DL model" are displayed.

The display region 1206a is a region corresponding to a combination of configuration data having a name of "Config A" and a DL model having a name of "DL A". In addition to the names "Config A" and "DL A", reference information indicating the results of performance evaluation of the FPGA 402 when the combination is used is displayed in the display region 1206a.

The display region 1206b is a region corresponding to combination of configuration data having a name of "Config C" and a DL model having a name of "DL D". In addition to the names "Config C" and "DL D", reference information indicating the results of performance evaluation of the FPGA 402 when the combination is used is displayed in the display region 1206b.

The arrangement of the display region 1206a and the display region 1206b is not limited to a specific arrangement. For example, the display region 1206a and the display region 1206b may be sorted and displayed according to the analysis period length or the detection accuracy included in the reference information of the display region 1206a and the display region 1206b, respectively. The display region 1206a and the display region 1206b are regions corresponding to combinations of configuration data and DL models determined to be supported by the detachable device 100 in the above-described step S902.

The display region 1207a is a region corresponding to combination of configuration data having a name of "Config A" and DL models having a name of "DL B". In the display region 1206a, a name "Config A" and a name "DL B" are displayed. Here, for the combination of the configuration data whose name is Config A and the DL model whose name is DL B, it is determined that "the combination cannot be stored in the storage unit 404 (memory shortage)" by the process of the above-described step S902. Therefore, the combination cannot be selected. Then, the display region 1207a is displayed in a display form different from the display region 1206a and the display region 1206b (for example, the display region 1207a is displayed to be filled with gray), and character information 1208a indicating the result of the determination is displayed under the display region 1207a.

The display region 1207b is a region corresponding to a combination of configuration data having a name of "Config B" and a DL model having a name of "DL C". In the display region 1207b, the name "Config B" and the name "DL C" are displayed. Here, for the combination of configuration data with the name "Config B" and the DL model with the name "DL C", it is determined that "the combination is not supported by the FPGA 402 chip" by the process of the above-described step S902. Therefore, the combination cannot be selected. Then, the display region 1207b is displayed in a display form different from the display region 1206a and the display region 1206b (for example, the display region 1207b is displayed to be filled with gray), and character information 1208b indicating the result of the determination is displayed under the display region 1207b.

That is, the combinations corresponding to the display region 1206a and the display region 1206b are data (candidate data) selectable as candidates for the combination of the configuration data and the DL model to be updated. On the other hand, the combinations corresponding to the display region 1207a and the display region 1207b are not candidate data. In the present embodiment, by displaying the display region 1206a and the display region 1206b in a display form different from the display region 1207a and the display region 1207b, the user is notified that a combination corresponding to the display region 1207a and the display region 1207b cannot be selected.

Next, the screen 1210 of FIG. 12B will be described. To generate the screen 1210, the processor 601 first generates a plurality of "combinations of configuration data and DL model" from the plurality of configuration data and the plurality of DL models received from the image capturing apparatus 110. Then, the processor 601 obtains the performance evaluation result for each combination for each of the plurality of FPGAs 402, generates a screen 1210 including "performance evaluation result for each combination" for each of the plurality of FPGAs 402 and displays it on the display unit 607. The user operates the operation unit 606 to select one combination from a plurality of combinations for each FPGA 402 as a "combination of configuration data and a DL model used for updating the FPGA 402".

In a row 1209a of the screen 1210, a "saved combination" display region and a "configuration data and DL model combinations" display region are displayed for the FPGA 402 whose name is "FPGA α" (hereinafter referred to as FPGAα) similarly to FIG. 12A. As the "saved combination" in the row 1209a, the following information is generated and displayed.

- The name of the configuration data for FPGAα (configuration data corresponding to the current logic circuit of FPGAα) stored in the storage unit 404 (the name of the chip of FPGAα may be displayed)
- The name (the name of the detection target may be displayed) of the DL model (a DL model set as the one used by the arithmetic processing unit 412 of FPGAα) for FPGAα stored in the storage unit 404.
- Reference information indicating performance evaluation results of FPGAα when using configuration data stored in the storage unit 404 for FPGAα and a DL model stored in the storage unit 404 for FPGAα

As the "configuration data and DL model combination list" in the row 1209a, the following information is generated and displayed.
(Combination 1) The name "Config A", the name "DL A", and reference information indicating the results of performance evaluation of FPGAα when using a combination of configuration data with the name "Config A" and a DL model with the name "DL A"
(Combination 2) The name "Config C", the name "DL D", and reference information indicating the results of performance evaluation of FPGAα when using a combination of configuration data with the name "Config C" and a DL model with the name "DL D"
(Combination 3) The name "Config A", the name "DL B", and reference information indicating the results of performance evaluation of FPGAα when using a combination of configuration data with the name "Config A" and a DL model with the name "DL B"
(Combination 4) The name "Config B", the name "DL C", and reference information indicating the results of performance evaluation of FPGAα when using a combination of configuration data with the name "Config B" and a DL model with the name "DL C"

Here, for the combination of configuration data with the name "Config A" and the DL model with the name "DL B", it is determined that "it is not possible to store the combination to the storage unit 404 (insufficient memory)". Also, for the combination of configuration data with the name "Config B" and the DL model with the name "DL C", it is determined that the combination is "not supported by the FPGAα chip". Therefore, similarly to FIG. 12A, the combination 3 and the combination 4 cannot be selected. Then, the combination 3 and the combination 4 are displayed in a display form different from the combination 1 and the combination 2 (for example, displayed to be filled in with gray), and character information indicating the result of the determination is displayed under the combination 3 and the combination 4.

That is, combination 1 and combination 2 are data (candidate data) selectable as a combination candidate of the configuration data and DL model to be updated, and combination 3 and combination 4 are not candidate data.

In a row 1209a of the screen 1210, a "saved combination" display region and a "configuration data and DL model combination" display region are displayed for the FPGA 402 whose name is "FPGA β" (hereinafter referred to as FPGAβ) similarly to FIG. 12A. As the "saved combination" in the row 1209a, the following information is generated and displayed.

- The name of the configuration data for FPGAβ (configuration data corresponding to the current logic circuit of FPGAβ) stored in the storage unit 404 (the name of the chip of FPGAβ may be displayed)
- The name (the name of the detection target may be displayed) of the DL model (the DL model set as the one used by the arithmetic processing unit 412 of FPGAβ) for FPGAβ stored in the storage unit 404.
- Reference information indicating the performance evaluation result of FPGAβ when using configuration data stored in the storage unit 404 for FPGAβ and a DL model stored in the storage unit 404 for FPGAβ

As the "configuration data and DL model combination list" in the row 1209a, the following information is generated and displayed.
(Combination 11) The name "Config B", the name "DL C", and reference information indicating the results of performance evaluation of FPGAβ when using a combination of configuration data with the name "Config B" and a DL model with the name "DL C"
(Combination 12) The name "Config D", the name "DL C", and reference information indicating the results of performance evaluation of FPGAβ when using a combination of configuration data with the name "Config D" and a DL model with the name "DL C"
(Combination 13) The name "Config A", the name "DL A", and reference information indicating the results of performance evaluation of FPGAβ when using a combination of configuration data with the name "Config A" and a DL model with the name "DL A"
(Combination 14) The name "Config B", the name "DL E", and reference information indicating the results of performance evaluation of FPGAβ when using a combination of configuration data with the name "Config B" and a DL model with the name "DL E"

Here, for the combination of configuration data with the name "Config A" and the DL model with the name "DL A", it is determined that "the combination is not supported by the FPGAβ chip (not supported by device)". Here, for the combination of configuration data with the name "Config B" and the DL model with the name "DL E", it is determined that "it is not possible to store the combination to the storage unit 404 (insufficient memory)". Therefore, similarly to FIG. 12A, the combination 13 and the combination 14 cannot be selected. Then, the combination 13 and the combination 14 are displayed in a display form different from the combination 11 and the combination 12 (for example, displayed to be filled in with gray), and character information indicating the result of the determination is displayed under the combination 13 and the combination 14.

That is, combination 11 and combination 12 are data (candidate data) selectable as a candidate combination of the configuration data and DL model to be updated, and combination 13 and combination 14 are not candidate data.

In step S1103, the processor 601 receives a user operation made in relation to the operation unit 606. The user selects the combination of the configuration data and the DL model to be updated using the operation unit 606 from the "saved combination" and the "combination list of configuration data and the DL model" (candidate data) displayed on the screen 1201/screen 1210.

In step S1104, the processor 601 determines whether one candidate data has been selected. When the result of this determination is that the user operated the operation unit 606 to select one candidate data, the process proceeds to step S1105. On the other hand, when the user operated the operation unit 606 to select something other than the candidate data (to select a saved combination), the process according to the flowchart of FIG. 11 ends.

In step S1105, the processor 601 notifies the image capturing apparatus 110 via a communication I/F 605 of information for identifying the candidate data selected in response to a user operation. The control unit 304 of the image capturing apparatus 110 receives the notified information via the network communication unit 307, and reads out the combination of the configuration data and the DL model specified based on the received information from the storage unit 303. Then, the control unit 304 transmits the combination of the read configuration data and the DL model to the detachable device 100 via the device communication unit 306. The input/output control unit 410 of the detachable device 100 receives the combination of the configuration data and the DL model transmitted from the image capturing apparatus 110 via the I/F unit 401. The input/output control unit 410 controls the SD controller 403 to write the received combination of the configuration data and the DL model in the storage unit 404.

In step S1106, the processing switching unit 411 generates (regenerates) a logic circuit having a structure based on the configuration data written in the storage unit 404 in step S1105, and writes the DL model written in the storage unit 404 in step S1105 to the arithmetic processing unit 412. As a result, the arithmetic processing of the arithmetic processing unit 412 is updated.

Thus, according to the present embodiment, it is possible to allow the user to select a combination to be used for updating from a plurality of combinations based on a plurality of configuration data and a plurality of DL models stored in the storage unit 303. This makes it possible to generate the FPGA 402 logic circuit with a performance that meets the user's requirements.

The subject of each process in each of the above embodiments is an example, and is not limited to the above description. For example, when dedicated hardware is mounted on the image capturing apparatus 110 or the detachable device 100, the hardware may execute some or all of the above-described processes.

In each of the above-described embodiments, a system for analyzing the number, position, etc. of objects in a captured image has been described as an example. However, the above embodiments are similarly applicable to systems for other purposes (such as a system for performing some kind of analysis processing on images captured by the image capturing apparatus 110).

Further, numerical values, processing timing, processing order, the processing subject, the configuration/transmission destination/transmission source/storage location of data (information) used in each of the above-described embodiments, the configuration of the screen, the method of operation, and the like are given as examples for specific explanation. That is, the present invention is not intended to be limited to such examples.

In addition, some or all of the above-described embodiments may be used in combination as appropriate. Also, some or all of the above-described embodiments may be used selectively.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiments) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

From a device mounted detachably to the image capturing apparatus, first information regarding data regarding a structure of a logic circuit in the device and second information regarding a learned model that the device is to use are received. Based on the first information, an update of the data that the device holds is controlled, and based on the second information, an update of the learned model that the device holds is controlled.

## Claims

1. An image capturing apparatus, comprising:
a communication means for receiving, from a device mounted detachably to the image capturing apparatus, first information regarding data regarding a structure of a logic circuit in the device and second information regarding a learned model that the device is to use;
a first control means for, based on the first information, controlling an update of the data that the device holds; and
a second control means for, based on the second information, controlling an update of the learned model that the device holds.

2. The image capturing apparatus according to claim 1, wherein the first control means performs control to update the data that the device holds in a case where the data is different to the data that the image capturing apparatus holds.

3. The image capturing apparatus according to claim 1, wherein in a case where the image capturing apparatus holds a plurality of the data, the first control means selects one based on the first information, and in a case where the data that the device holds is other than the one, the first control means performs control to update the data that the device holds.

4. The image capturing apparatus according to any one of claims 1 to 3, wherein the first control means transmits to the device the data that the image capturing apparatus holds, and performs control to cause the device to hold the transmitted data.

5. The image capturing apparatus according to any one of claims 1 to 4, wherein the second control means performs control to update the learned model that the device holds in a case where the learned model is different to the learned model that the image capturing apparatus holds.

6. The image capturing apparatus according to any one of claims 1 to 4, wherein in a case where the image capturing apparatus holds a plurality of the learned model, the second control means selects one based on the second information, and in a case where the learned model that the device holds is other than the one, the second control means performs control to update the learned model that the device holds.

7. The image capturing apparatus according to any one of claims 1 to 6, wherein the second control means performs control to transmit to the device the learned model that the image capturing apparatus holds, and cause the device to hold the transmitted learned model.

8. An information processing apparatus connected to the image capturing apparatus according to any one of claims 1 to 7, the information processing apparatus comprising:
a display means for generating a plurality of combinations of the data and the learned model from a plurality of the data and a plurality of the learned model, and displaying the generated plurality of combinations; and
a notification means for notifying to the image capturing apparatus a combination selected in response to a user operation from among the plurality of combinations,
wherein
the image capturing apparatus causes the data and the learned model that the device holds to be updated to the data and the learned model of the combination notified from the information processing apparatus.

9. The information processing apparatus according to claim 8, wherein the display means, so that a combination that is not supported by the device in the plurality of combinations cannot be selected, displays the combinations that are supported by the device in the plurality of combinations in different display forms of the combinations that not are supported by the device in the plurality of combinations.

10. The information processing apparatus according to claim 8 or 9, wherein the display means displays a performance evaluation result of the logic circuit for a case where a combination supported by the device was used.

11. A method for controlling an image capturing apparatus, the method comprising:
receiving, from a device mounted detachably to the image capturing apparatus, first information regarding data regarding a structure of a logic circuit in the device and second information regarding a learned model that the device is to use;
based on the first information, controlling an update of the data that the device holds; and
based on the second information, controlling an update of the learned model that the device holds.
